# FASCICULE DE BREVET EUROPEEN

(11) **EP 3 439 901 B1**
(45) Date de publication et mention de la délivrance du brevet: **09.06.2021**
(21) Numéro de dépôt: 17720194.4
(22) Date de dépôt: 04.04.2017
(51) Int. Cl.: B60C 13/00

(54) **PNEUMATIQUE**
REIFEN
TIRE

(30) Priorité: 08.04.2016 FR 1600597
(43) Date de publication de la demande: 13.02.2019
(73) Titulaire: Compagnie Générale des Etablissements Michelin, 63000 Clermont-Ferrand (FR)
(72) Inventeur: DESVIGNES, Jean-Claude, 63040 CLERMONT-FERRAND Cedex 9 (FR); GLIBERT, Séverine, 63040 CLERMONT-FERRAND Cedex 9 (FR); MUHLHOFF, Olivier, 63040 CLERMONT-FERRAND Cedex 9 (FR)
(74) Mandataire: Lasson, Cédric Yves
(86) Numéro de dépôt international: PCT/FR2017/050786
(87) Numéro de publication internationale: WO 2017/174920

(56) Documents cités:
- WO-A1-2015/165863
- DE-A1-102013 223 566
- JP-A- 2012 224 194

## Description

### DOMAINE TECHNIQUE DE L'INVENTION

La présente invention concerne un pneumatique pourvu d'un code visuel positionné sur une zone de flanc. Elle concerne plus spécifiquement un pneumatique en matériau caoutchoutique dont au moins un des flancs comporte un code matriciel constitué d'une pluralité de parties agencées selon des configurations normalisées.

### ETAT DE LA TECHNIQUE ANTERIEURE

De nombreux types de marquages, inscriptions et codes sont apposés sur les flancs des pneumatiques. Les marquages et inscriptions servent typiquement à identifier les manufacturiers, les dimensions et références des pneumatiques. Les codes normalisés, tels que QR code ™, Flashcode, MaxiCode ™, Datamatrix ™, et autres, déjà largement répandus dans des applications où le code est imprimé sur un support, commencent à être utilisés dans l'univers des pneumatiques. Or, les flancs des pneumatiques ne permettent pas d'imprimer les codes de façon classique. Les flancs sont en général très sombres, en matériau caoutchoutique, soit un support sur lequel il est particulièrement difficile de mettre en évidence des codes matriciels de façon aisément visible.

Le document WO2015/165863 décrit un pneumatique dont au moins un flanc porte un code matriciel. Le code matriciel comporte des parties sombres et des parties claires, les parties sombres étant composées d'une texture venue de matière avec le flanc et faisant contraste avec le reste du pneumatique. Les codes matriciels apposés selon l'enseignement de ce document sont susceptibles de présenter des niveaux de visibilité restreints lorsque les conditions lumineuses ne sont pas idéales, et/ou en cas de présence de salissures. Or, les utilisateurs qui souhaitent recevoir les données mises à disposition par le code n'ont pas toujours la possibilité de récupérer les données par un autre moyen en cas de non lisibilité. Il est donc essentiel que la lisibilité des codes matriciels soit vraiment optimale et ceci durant tout le temps d'utilisation du pneumatique. Les documents DE102013223566 et JP2012224194 divulguent un pneumatique comportant un symbole présentant des parties sombres et des parties claires.

Pour pallier ces différents inconvénients, l'invention prévoit différents moyens techniques.

### EXPOSE DE L'INVENTION

Tout d'abord, un premier objet de l'invention consiste à prévoir un pneumatique pourvu de codes matriciels avec des caractéristiques de lisibilité optimales.

**Un** autre objet de l'invention consiste à prévoir un pneumatique pourvu de codes matriciels fiables, et permettant de récupérer les données correspondantes avec un pourcentage d'erreur minimal, voire sensiblement nul.

Pour ce faire, l'invention prévoit un pneumatique en matériau caoutchoutique dont au moins un des flancs comporte un symbole matriciel codé venu de matière avec le flanc, ledit symbole matriciel codé comprenant des parties sombres et des parties claires, les parties sombres étant en creux par rapport aux parties claires, la profondeur des creux étant comprise entre 0,1 et 0,8 mm, et plus préférentiellement entre 0,2 et 0,5 mm, les parties sombres étant délimitées par des parois, ces parois étant inclinées par rapport à une normale (N) au flanc du pneumatique d'un angle de dépouille α compris entre 3 et 50 degrés. Chaque partie sombre ayant un fond, pour tout ou partie des parties sombres, le fond présente un état de surface déterminé dont la rugosité Rz est comprise entre 50 et 300 µm.

Ces caractéristiques confèrent une pérennité au symbole matriciel codé. En effet, les parties en creux sont protégées contre les agressions mécaniques telles que les chocs ou frottements contre un trottoir. Par ailleurs, un tel agencement de code matriciel permet d'améliorer les caractéristiques de lisibilité, rendant le code fiable pour tout type d'utilisations et quelles que soient les conditions d'utilisation. En effet, grâce à un tel agencement, avec un éclairage rasant lors de la lecture du code, l'encastrement permet de générer une ombre abaissant la luminosité de la partie sombre.

L'angle de dépouille permet de réduire la surface du fond susceptible de renvoyer de la lumière. Il permet en outre de rendre plus résistantes les parties sombres notamment aux agressions mécaniques. De manière préférentielle, l'angle de dépouille se situe entre 5 et 20 degrés.

Supprimé

De manière avantageuse, le fond est délimité par au moins un sillon. Ce sillon favorise la visualisation des parties sombres.

Pour tout ou partie des parties sombres, les parois d'une partie sombre se rejoignent préférentiellement au centre de cette partie sombre. Cet agencement permet de former des pyramides inversées. Grâce à cette mise en forme, on réduit les risques de créer des amorces de fissuration et les contraintes en fond de parties sombres sont mieux réparties. L'extrémité de la pyramide peut être tronquée ou en forme arrondie.

Selon un mode de réalisation avantageux, deux parties sombres adjacentes sont séparées par une cloison. Une cloison comporte une épaisseur inférieure à la largeur d'une partie sombre. Ainsi, une cloison est moins large que les parties sombres qu'elle sépare. Par exemple, les parois constituant les séparations ont une hauteur par rapport aux motifs en creux constituant les parties sombres comprise entre 0,1 et 0,8 mm. De manière avantageuse, les parois affleurent les parties claires. Un tel agencement permet, avec un éclairage rasant, d'obtenir la même ombre pour toutes les parties sombres. Cette caractéristique permet donc d'homogénéiser les parties sombres entre elles, donc de faciliter le décodage.

De manière avantageuse, les sections des parties sombres sont globalement carrées. En variante, les parties sombres sont globalement carrées avec des coins arrondis. Encore en variante, les parties sombres sont en forme de polygones constitués de plusieurs carrés groupés, dont chaque angle est de sensiblement 90 degrés. Ces variantes de réalisation permettent de maximiser la surface de partie sombre pour un décodage facilité.

Selon encore une autre variante de réalisation, la section des parties sombres ont globalement une forme de disque. Cette caractéristique permet de faciliter la phase de reconnaissance des parties sombres lors du décodage. Les disques sont plus faciles à reconnaitre que les carrés notamment parce que leurs centres peuvent être déterminés de manière plus précise lorsque les parties sombres sont partiellement altérées. Ainsi, même une prise de vue avec un léger flou peut être décodée.

De manière avantageuse, les parties sombres ont au moins une dimension comprise entre 0,2 mm et 1 mm, et plus préférentiellement entre 0,3 et 0,7 mm. Cette variante permet de miniaturiser la taille du code matriciel, miniaturisation rendue possible par tous les perfectionnements énoncés visant à faciliter le décodage.

De manière avantageuse, l'ensemble du symbole matriciel codé est encastré, au moins en partie, par rapport à la surface extérieure du flanc du pneumatique, la profondeur d'encastrement du symbole matriciel codé étant préférentiellement comprise entre 0,2 mm et 0,8 mm. Cette variante de réalisation permet de protéger le code matriciel des râpages et griffures que subissent les flancs des pneus lors des usages sévères.

On entend par « encastré » que ni les parties claires ni les parties sombres (texture) ne sont affleurantes au niveau de la surface extérieure du flanc. Ainsi le flanc comporte un logement dans lequel est disposé le symbole matriciel codé. Les parties sombres et les parties claires s'étendent au-dessous de la surface du flanc, ladite surface étant la surface supérieure du flanc. Le fait que ces parties sombres et ces parties claires ne remontent pas jusqu'au niveau de la surface du flanc permet d'avoir un symbole matriciel codé plus robuste notamment lors de râpage trottoir. Par ailleurs, cela perturbe moins l'écoulement de l'air qui est ainsi plus fluide et qui suit donc mieux la surface du flanc.

Selon un mode de réalisation avantageux, la profondeur d'encastrement du symbole matriciel codé est variable par rapport à la surface extérieure du flanc du pneumatique.

Selon encore un mode de réalisation avantageux, le fond du symbole matriciel codé est sécant (c'est à dire non parallèle) avec la surface extérieure du flanc du pneumatique.

Selon un autre mode de réalisation avantageux, le flanc comprend au moins une protubérance pour la protection du symbole matriciel codé.

De manière avantageuse, le symbole matriciel codé suit la courbure radiale du flanc.

De manière avantageuse, chaque flanc du pneumatique comporte au moins un symbole matriciel codé. Cette variante permet de réaliser le décodage même si un des deux codes a été altéré ou est devenu indécodable.

Selon un autre mode de réalisation avantageux, les symboles matriciels codés sont différents d'un flanc à l'autre dudit pneumatique. Cette variante permet par exemple de donner une information sur l'orientation du pneu, par exemple pour un pneu directionnel ou asymétrique.

Selon encore un mode de réalisation avantageux, les parties claires du symbole matriciel codé sont réalisées au cours d'une opération de moulage du pneumatique et les parties sombres sont réalisées par un procédé de gravure au laser après cette opération de moulage.

Selon encore un mode de réalisation avantageux, le symbole matriciel codé est adapté pour coder des données sur 50 à 120 digits, et plus préférentiellement sur 96 digits.

L'invention prévoit également un procédé de réalisation d'un symbole matriciel codé sur un pneumatique, ledit symbole matriciel codé comprenant des parties sombres et des parties claires, ledit procédé de réalisation comportant :
- une étape de moulage d'une zone claire sur le flanc du pneumatique ;
- une étape de gravure au laser des parties sombres du symbole matriciel codé sur la zone claire du flanc du pneumatique, les parties claires du symbole matriciel codé étant des portions de la zone claire non gravées, les parties sombres étant en creux par rapport aux parties claires, la profondeur de creux étant comprise entre 0,1 et 0,8 mm, et plus préférentiellement entre 0,2 et 0,5 mm. Les parties sombres sont délimitées par des parois, au moins une de ces parois étant inclinée par rapport à une normale au flanc du pneumatique d'un angle de dépouille α compris entre 3 et 50 degrés.

L'étape de gravure au laser des parties sombres comporte :
- une étape d'enlèvement de matière pour réaliser les parois des parties sombres ;
- une étape de réalisation d'un état de surface déterminé dans le fond des parois sombres, cet état de surface présentant une rugosité Rz comprise entre 50 et 300 µm.

Cette approche permet de générer des symboles matriciels codés de façon simple, efficace, avec une très grande souplesse quant au format du code et aux données à encoder.

De manière avantageuse, le traitement de surface est réalisé à l'aide d'un laser. Cet appareil permet de graver des zones selon une configuration de codage donnée avec une très grande précision et rapidité. Les données à encoder sont aisément obtenues à l'aide d'un outil ou logiciel d'encodage, prévu pour fournir des ensembles de codes adaptés pour des grandes quantités de pneumatiques à identifier. Les codes peuvent aisément être individualisés, permettant par exemple d'encoder des numéros d'identifications uniques pour chacun des pneumatiques.

### DESCRIPTION DES FIGURES

Tous les détails de réalisation sont donnés dans la description qui suit, complétée par les figures 1 à 18, présentées uniquement à des fins d'exemples non limitatifs, et dans lesquelles:
- la figure 1 représente un exemple de pneumatique portant un code matriciel apposé sur un flanc ;
- la figure 2 représente un autre exemple de pneumatique portant un code matriciel apposé sur un flanc ;
- la figure 3 est une coupe partielle d'un flanc d'un pneumatique illustrant un exemple d'agencement selon l'invention ;
- la figure 4 illustre une portion d'une échelle de luminance, avec les parties préférentielles de luminosité pour les parties claires et les parties sombres des codes matriciels selon l'invention ;
- les figures 5A et 5B illustrent schématiquement des vues agrandies d'un exemple de code selon l'invention en cours de réalisation, à différentes étapes ;
- la figure 6 montre l'exemple de la figure 5 après mise en oeuvre complétée ;
- les figures 7 et 8 montrent des exemples de profils de parties sombres pour des codes matriciels selon l'invention ;
- les figures 9 à 11 illustrent des exemples d'agencements de parties claires et sombres ;
- la figure 12 illustre un autre exemple de type de partie sombre ;
- la figure 13 présente un exemple théorique de géométrie de partie sombre ;

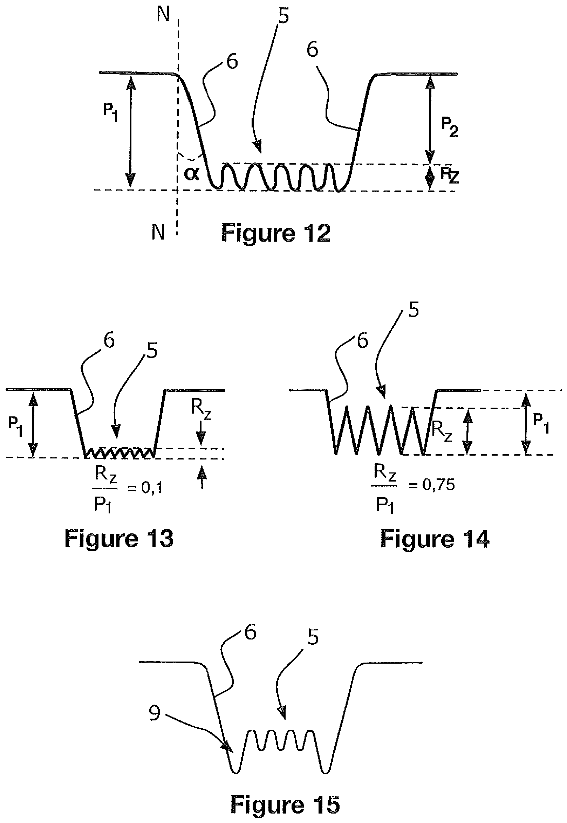

- les figures 13 et 14 illustrent des exemples pratiques de géométries de parties sombres ;
- la figure 15 illustre un autre exemple de réalisation de partie sombre ;

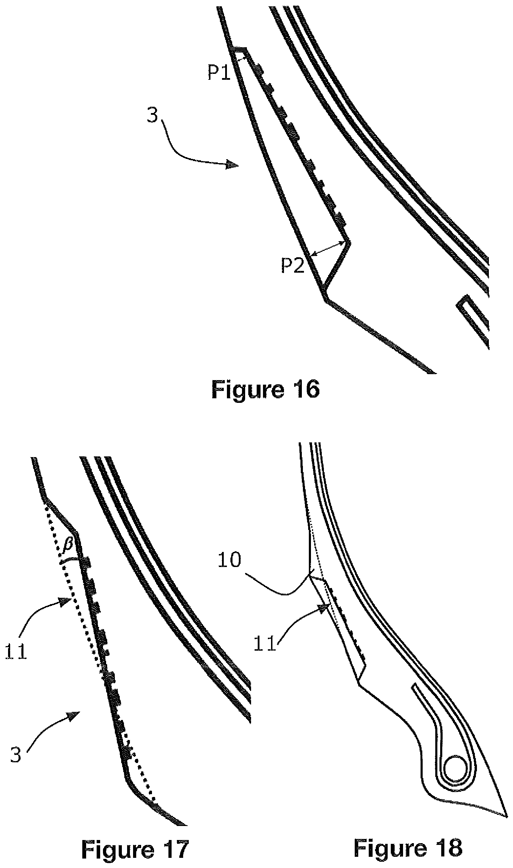

- la figure 16 illustre schématiquement un autre exemple de pneumatique portant un code matriciel dans lequel la profondeur d'encastrement du symbole matriciel codé est variable par rapport à la surface extérieure du flanc du pneumatique;
- la figure 17 illustre schématiquement un autre exemple de pneumatique portant un code matriciel dans lequel le fond du symbole matriciel codé est sécant avec la surface extérieure théorique du flanc du pneumatique;
- la figure 18 illustre schématiquement un autre exemple de pneumatique portant un code matriciel apposé sur un flanc et protégé par une protubérance.

### DESCRIPTION DETAILLEE DE L'INVENTION

### Définitions

Par « venu de matière », on entend un élément ou zone d'un corps qui est réalisé dans le même matériau que le corps lui-même, dans la continuité de celui-ci, sans être rapporté. Un élément venu de matière avec un autre forme une seule et même pièce avec ce dernier.

Par « luminosité », « luminance », ou « clarté », on entend le paramètre qui caractérise la capacité d'une surface à réfléchir plus ou moins la lumière. La luminosité L* est exprimée dans une échelle allant de 0 à 100 selon le modèle colorimétrique L*a*b* établit par la CIE (Commission Internationale de l'Eclairage) en 1976. La valeur 100 représente le blanc ou la réflexion totale ; la valeur 0, le noir ou l'absorption totale. Dans ce modèle colorimétrique a* et b* sont des coordonnées de chromaticité. Le modèle colorimétrique L*a*b* définit également un diagramme de chromaticité. Dans ce diagramme, a* et b* indiquent la direction des couleurs : +a* va vers le rouge, -a* vers le vert, +b* vers le jaune, et -b* vers le bleu. Le centre du diagramme est achromatique. Au fur et à mesure que les valeurs a* et b* augmentent, et que l'on s'éloigne donc du centre du diagramme, la saturation augmente.

Par « symbole matriciel codé », on entend un code dit « intelligent » où les données sont encodées en deux dimensions (sous la forme d'une pluralité de rangées et de colonnes), les données étant décodables par un imageur d'une machine, tel qu'un téléphone portable. Un symbole matriciel codé encode un volume nettement plus important de données pour une même surface donnée qu'un code barre linéaire traditionnel et comporte un système intégré de correction d'erreurs. Le symbole matriciel codé est un symbole sélectionné parmi un ensemble de symboles comportant notamment :
- un datamatrix ™
- un QR™ ;
- un QR code™ ;
- un MaxiCode™ ;
- un PDF-417™ ;
- un code 16K™ ;
- un code 49™ ;
- un code Aztec™

Les pneumatiques modernes possèdent la particularité de posséder sur leur surface externe une couleur sombre qui ne favorise pas les conditions de décodage des symboles matriciels codés. De plus, après leur fabrication, la surface des pneumatiques change de composition progressivement suite à une migration de substances chimiques contenues à l'intérieur du pneumatique vers sa surface extérieure. La surface extérieure du pneumatique est ainsi recouverte progressivement par exemple de cires. Ces cires ne sont pas transparentes et changent la couleur et l'aspect du flanc, complexifiant encore le décodage des symboles matriciels codés.

L'expérience montre que des rugosités de surface permettant de différencier les parties sombres et les parties claires d'un code 2D se retrouvent au moins partiellement masquées par ces remontées de cires, ce qui entraine une diminution du contraste avec le temps, lié au vieillissement du pneumatique.

Il existe aussi d'autres phénomènes de masquage entrainant des diminutions de contraste, tels que les salissures liées aux poussières, notamment celles venant des plaquettes de freins.

Les conditions de décodage sont donc souvent délicates, et des décodeurs performants sont préférentiellement utilisés.

Des dispositifs de décodage très performants existent aujourd'hui. Ils sont souvent pourvus de moyens permettant d'optimiser les performances de décodage, tels qu'un éclairage adapté et maitrisé, des logiciels perfectionnés et spécifiquement adaptés, etc. Les moyens actuels de décodage ont une très bonne capacité à décoder des réalisations de code 2D dans toutes les situations car ils permettent, notamment, un éclairage maitrisé du code au moment du décodage. Ainsi, ils permettent de décoder des codes possédant une faible différence de luminosité entre partie sombres et parties claires.

Cette capacité est très intéressante pour pouvoir décoder des codes 2D sur des pneumatiques ayant vieillis.

Le symbole matriciel codé selon l'invention permet avantageusement de prolonger dans le temps, lorsque le pneumatique vieilli, la possibilité de décodage d'un code agencé sur le flanc du pneu.

La solution technique proposée permet aussi de faciliter le décodage par des moyens professionnels, ou non professionnels, comme par exemple de type « smartphone ».

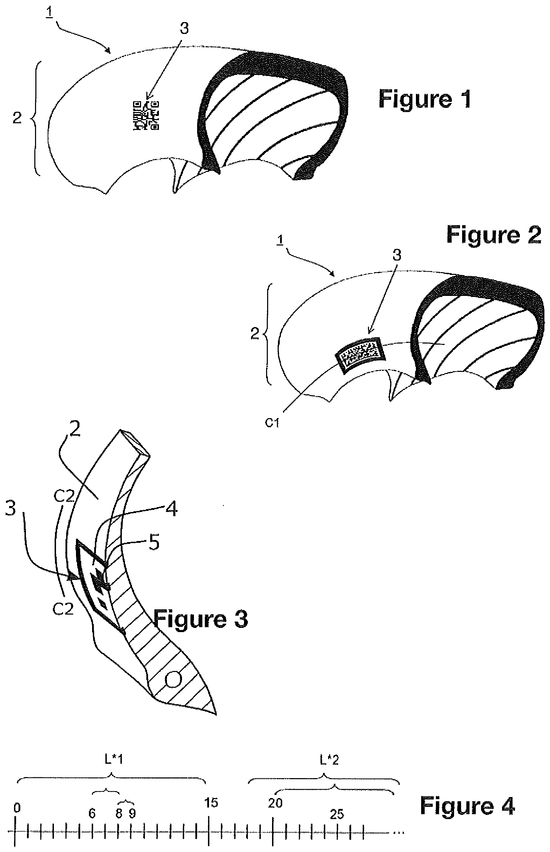

La figure 1 montre une vue partielle d'un pneumatique 1 comportant un exemple de symbole matriciel codé 3 agencé sensiblement à mi-hauteur d'un des flancs 2. La figure 2 montre un autre exemple avec un symbole matriciel codé 3 prévu en zone basse du flanc 2. Dans cet exemple, le symbole matriciel codé 3 est agencé en suivant la courbure circonférentielle C1 du pneumatique, tel que montré sur la figure. Dans un mode de réalisation non limitatif, tel qu'illustré à la figure 2, le symbole matriciel codé a la forme d'un rectangle et il s'allonge dans la circonférence du pneumatique.

La figure 3 illustre un autre exemple de symbole matriciel codé 3 agencé sur un flanc 2. On observe que le symbole matriciel 3 est profilé suivant la courbure radiale C2 du flanc du pneumatique.

La figure 4 illustre une échelle connue des valeurs de luminance, selon des valeurs de 0 à 100. Selon cette échelle, le noir absolu a une valeur de 0, tandis qu'à l'autre extrémité de l'échelle, le blanc absolu a une valeur de 100. La figure 4 illustre également des exemples de valeurs pour des parties sombres et des parties claires utilisées avec des symboles matriciels codés selon l'invention.

Dans un exemple non limitatif, l'appareil de mesure approprié est un spectro-colorimètre CM 700D de la marque KONICA-MINOLTA. Cet appareil est adapté pour mesurer :
- la luminosité L*1, L*2 d'une zone du symbole matriciel codé 3 (partie sombre ou partie claire);
- une composante a* qui définit une première nuance de couleur entre le rouge et le vert ;
   une composante b* qui définit une deuxième nuance de couleur entre le jaune et le bleu.

On positionne ledit appareil sur la partie du symbole matriciel codé 3 que l'on veut mesurer et ledit appareil donne les valeurs des trois paramètres L*, a*, b*. Ces mesures sont effectuées avec le mode SCI (Mode de réflexion spéculaire incluse) paramétré à un angle de 10° et un réglage de la lumière de type D65 (réglage défini selon la Commission Internationale de l'Eclairage, CIE).

Avec l'appareil de mesure, il est ainsi possible de quantifier la différence de luminosité entre les parties sombres et les parties claires du symbole matriciel codé. Plus cette différence de luminosité est importante, meilleure sera la lecture de ce symbole matriciel par un appareil de lecture adéquate. L'appareil de mesure du symbole matriciel codé est par exemple le DataMan 8600 de la société Cognex ®.

### PROCEDE DE REALISATION

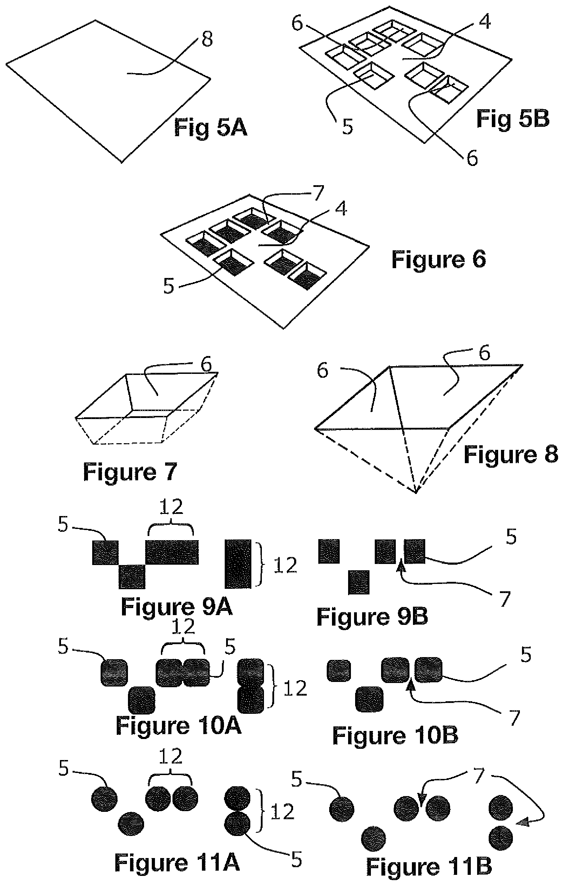

Selon un mode de réalisation préférentiel, les symboles matriciels codés sont réalisés à l'aide d'un procédé impliquant une phase réalisée lors du moulage du pneumatique, et une phase effectuée après démoulage. Ce procédé consiste tout d'bord à prévoir une zone de code matriciel sur un moule du pneumatique. Ensuite, le pneumatique est vulcanisé avec le moule comportant l'empreinte. Après démoulage, et avant une étape de traitement par laser (décrite plus en détails ultérieurement) on obtient une zone claire 8 telle que montré à la figure 5A.

A la figure 5B, après une étape d'enlèvement de matière, les parois 6 des parties sombres sont formées. Grâce à cet enlèvement de matière, les parties sombres sont en creux par rapport aux parties claires 4. Le niveau d'enfoncement, ou profondeur de creux formé par les parties sombres est compris entre 0,1 et 0,8 mm, et plus préférentiellement entre 0,2 et 0,5 mm.

Comme il a déjà été expliqué, le procédé de réalisation comporte :
- une étape de moulage de la zone claire 8 sur le flanc du pneumatique ;
- une étape de gravure au laser des parties sombres 5 du symbole matriciel codé 3 sur la zone claire 8 du flanc du pneumatique, les parties claires 4 du symbole matriciel codé étant des portions de la zone claire 8 non gravées, les parties sombres 5 étant en creux par rapport aux parties claires 4, la profondeur de creux étant comprise entre 0,1 et 0,8 mm, et plus préférentiellement entre 0,2 et 0,5 mm. Les parties sombres 5 sont délimitées par des parois 6, au moins une de ces parois 6 est inclinée par rapport à une normale (N) au flanc 2 du pneumatique d'un angle de dépouille α compris entre 3 et 50 degrés. L'étape de gravure au laser des parties sombres 5 comporte :
   - une étape d'enlèvement de matière pour réaliser les parois 6 des parties sombres ;
   - une étape de réalisation d'un état de surface déterminé dans le fond des parois sombres, cet état de surface présentant une rugosité Rz comprise entre 50 et 300 µm.

La figure 6 illustre le même symbole matriciel après traitement par laser. Les parties sombres 5 sont à ce stade pourvues de l'état de surface permettant de produire les valeurs de luminosité prévues pour ces parties. Par exemple, on obtient les valeurs de luminosité grâce à une étape de réalisation d'un état de surface déterminé dans le fond des parties sombres, cet état de surface présentant une rugosité Rz comprise entre 50 et 300 µm. Par des réglages appropriés des paramètres du laser, il est possible de réaliser simultanément les étapes d'enlèvement de matière et de réalisation d'un état de surface déterminé dans le fond des parties sombres.

L'utilisation d'un laser présente de très nombreux avantages. En outre, le laser permet de réaliser de façon simple et rapide le traitement de surface requis pour atteindre les niveaux de luminance souhaités. Le laser permet aussi de réaliser des codes différents, sans que les moules doivent être modifiés. Le laser est aussi très adapté à un processus industriel impliquant un très important volume de pièces réalisées. Par exemple, les codes à graver peuvent être préprogrammés avant des opérations de gravure laser en grande série. Enfin, le laser permet de réaliser des codes de grande qualité, avec d'excellentes caractéristiques de lisibilité.

### SPECIFICITES DES PARTIES SOMBRES

Les figures 7 et 8 illustrent schématiquement des exemples de formes pour les parties sombres 5. On observe que les parties sombres 5 sont délimitées par des parois 6, ces parois 6 étant inclinées par rapport à une normale N au flanc 2 du pneumatique d'un angle de dépouille α compris entre 5 et 50 degrés et plus préférentiellement entre 5 et 20 degrés. La figure 12 montre la normale N et l'angle de dépouille. La figure 8 montre une variante de réalisation dans laquelle les parois 6 d'une partie sombre se rejoignent au centre de cette partie, formant ainsi une pyramide inversée. En variante, le sommet de la pyramide est de forme arrondie.

Les figures 9A et 9B, 10A et 10B, 11A et 11B montrent des exemples de formes et d'agencement de parties sombres 5 par rapport à des parties claires 4. Comme il a déjà été expliqué précédemment, les parties sombres 5 sont en creux par rapport aux parties claires 4, du fait de la réalisation de ces parties sombres par gravure laser. Les parties sombres sont carrées (figures 9A et 9B), carrées avec des coins arrondis (figures 10A et 10B), ou en forme de disque (figures 11A et 11B). Selon les agencements, plusieurs parties sombres 5 peuvent être adjacentes, et peuvent dans ce cas être séparées par une cloison 7, formée par le jumelage de deux parois 6 opposées de deux parties sombres voisines. Ces cloisons 7 permettent de bien visualiser chacune des parties sombres 5, facilitant ainsi les opérations de décodage. Deux ou plus parties sombres adjacentes peuvent former une zone sombre 12 dont la surface est sensiblement un multiple des parties sombres unitaires. Les figures 9A, 10A et 11A illustrent de tels exemples.

La variante de réalisation de la figure 11A prévoit une forme des motifs constituant les parties sombres en forme de disque, les motifs adjacents étant distinct les uns des autres et ne se touchant tout au plus qu'en un seul point. Cette variante de réalisation permet de maximiser la surface sombre, tout en séparant les parties sombres les unes des autres.

L'intérêt de réaliser des motifs ronds est de faciliter le décodage par analyse d'image. Chaque motif constituant les parties sombres est séparé de ses éventuels voisins identiques, ce qui facilite la détermination du périmètre de chaque partie. Un motif circulaire présente une symétrie de révolution avec un centre. C'est donc le motif existant le plus simple. Il présente aussi la particularité, grâce à cette simplicité, de pouvoir être davantage miniaturisé qu'un motif carré. Le motif carré avec coins arrondis est intermédiaire entre le carré et le rond.

Les figures 12, 13, 14 et 15 illustrent des exemples de réalisation de parties sombres. Ces parties sont délimitées par des parois 6, tel que préalablement décrit. Comme cela est illustré à la figure 12, les parois 6 sont inclinées d'un angle de dépouille a. Cet angle de dépouille α est compris entre 3 et 50 degrés. Dans un mode de réalisation préférentiel, l'angle de dépouille α est compris entre 5 et 20 degrés. Dans les exemples de réalisation des figures 12, 13, 14, 15, la rugosité Rz des parties sombres est comprise entre 50 et 300 µm. La figure 13 illustre un exemple de réalisation dans lequel la rugosité Rz est faible par rapport à la profondeur P1. Ainsi le rapport Rz/P1 est inférieur ou égal à 0,1. La figure 14 illustre un autre exemple de réalisation, dans lequel la rugosité Rz est proche de la profondeur P1. Ainsi le rapport Rz/P1 est supérieur ou égal à 0,75. La figure 15 illustre un exemple de réalisation dans lequel des sillons 9 sont agencés à la périphérie de la partie sombre 5. Ces sillons permettent ainsi une meilleure délimitation de cette partie sombre, pour une lisibilité optimale du code intelligent.

La figure 16 illustre un exemple de réalisation dans lequel la profondeur d'encastrement du symbole matriciel codé est variable par rapport à la surface extérieure du flanc du pneumatique. Sur la figure 16, on observe que la profondeur d'encastrement varie d'une valeur P1 à P2 en fonction de la position le long du flanc (où P2 est supérieure à P1 d'au moins 20% et de préférence d'au moins 50%).

La figure 17 illustre un exemple de réalisation dans lequel le fond du symbole matriciel codé est sécant avec la surface extérieure 11 théorique du flanc du pneumatique. De cette manière, on peut donner une orientation au symbole matriciel codé qui lui permet une lisibilité optimale.

Dans un mode de réalisation non limitatif, le symbole matriciel codé fait un angle β avec la surface extérieure théorique 11 du flanc. Cet angle β est supérieur à 0° et inférieur ou égal à 30°. Préférentiellement, l'angle β est compris entre 10° et 20°

La figure 18 illustre un exemple de réalisation dans lequel un flanc comprend une protubérance 10 permettant d'assurer la protection d'un symbole matriciel codé 3 situé au voisinage immédiat de la protubérance.

Les dispositions respectives des parties claires et sombres permettent de réaliser une quasi-infinité de combinaisons, chacune correspondant à un code distinct. Les données contenues dans les codes peuvent varier selon les besoins. Ces données peuvent par exemple comporter des identifiants de dimension et/ou de type de pneumatique d'origine ou le nom du manufacturier, ou des données de numéro de série unique pour chaque pneumatique.

On notera enfin qu'aux figures 2, 3 ,16, 17, 18 le symbole matriciel codé est positionné en zone basse du pneumatique, c'est-à-dire en-dessous de la zone de largeur maximale du flanc. Par « zone de largeur maximale du flanc », on entend l'ensemble des points de ce flanc qui sont le plus axialement extérieur. Dit autrement, chaque point de cette zone de largeur maximale est selon une vue en coupe méridienne, à la plus grande distance d'un plan équatorial, distance mesurée selon une direction axiale, le pneumatique étant monté et gonflé sur une jante recommandée par l'ETRTO. Plus particulièrement, le symbole matriciel codé est à proximité d'un bourrelet du flanc. Lorsque le pneumatique est monté et gonflé sur une jante ayant un crochet de jante, la distance entre le symbole matriciel codé et le crochet de jante est compris entre 5 et 30 mm. Cette distance est par exemple mesurée entre une partie proximale du symbole matriciel codé avec le crochet de jante, c'est-à-dire une zone inférieure du symbole matriciel codé, et ledit crochet de jante.

### Numéros de référence employés sur les figures

- 1: Pneumatique
- 2: Flanc
- 3: Symbole matriciel codé
- 4: Partie claire
- 5: Partie sombre
- 6: Paroi
- 7: Cloison
- 8: Zone claire
- 9: Sillon
- 10: Protubérance de flanc
- 11: Surface extérieure théorique du flanc
- 12: Zone sombre

## Revendications

1. Pneumatique (1) en matériau caoutchoutique dont au moins un des flancs (2) comporte un symbole matriciel codé (3) venu de matière avec ledit flanc (2), ledit symbole matriciel codé comprenant des parties sombres (5) et des parties claires (4), les parties sombres (5) étant en creux par rapport aux parties claires (4), la profondeur de creux étant comprise entre 0,1 et 0,8 mm, et plus préférentiellement entre 0,2 et 0,5 mm, les parties sombres (5) étant délimitées par des parois (6), au moins une de ces parois (6) étant inclinée par rapport à une normale (N) audit flanc (2) du pneumatique d'un angle de dépouille α compris entre 3 et 50 degrés, chaque partie sombre (5) ayant un fond, **caractérisé en ce que** pour tout ou partie des parties sombres (5), le fond présente un état de surface déterminé dont la rugosité Rz est comprise entre 50 et 300 µm.

2. Pneumatique selon la revendication 1, **caractérisé en ce que** pour tout ou partie des parties sombres (5), les parois (6) d'une partie sombre se rejoignent au centre de cette partie sombre.

3. Pneumatique selon la revendication 2, **caractérisé en ce que** le fond est délimité par au moins un sillon.

4. Pneumatique selon l'une quelconque des revendications 1 à 3, **caractérisé en ce que** deux parties sombres (5) adjacentes sont séparées par une cloison (7).

5. Pneumatique selon l'une quelconque des revendications 1 à 4, **caractérisé en ce que** les sections des parties sombres (5) sont globalement carrées.

6. Pneumatique selon l'une quelconque des revendications 1 à 4, **caractérisé en ce que** la section des parties sombres a globalement une forme de disque.

7. Pneumatique selon l'une quelconque des revendications 1 à 6, **caractérisé en ce que** les parties sombres (5) ont au moins une dimension comprise entre 0,2 mm et 1 mm plus préférentiellement entre 0,3 et 0,7 mm.

8. Pneumatique selon l'une quelconque des revendications 1 à 7, **caractérisé en ce que** l'ensemble du symbole matriciel codé est encastré, au moins en partie, par rapport à la surface extérieure du flanc du pneumatique, la profondeur d'encastrement du symbole matriciel codé étant préférentiellement comprise entre 0,2 mm et 0,8 mm.

9. Pneumatique selon la revendication 8, **caractérisé en ce que** la profondeur d'encastrement du symbole matriciel codé est variable par rapport à la surface extérieure du flanc du pneumatique.

10. Pneumatique selon l'une quelconque des revendications 7 ou 8, **caractérisé en ce que** le fond du symbole matriciel codé est sécant avec la surface extérieure (11) théorique dudit flanc (2) du pneumatique.

11. Pneumatique selon l'une quelconque des revendications 1 à 9, **caractérisé en ce que** le fond du symbole matriciel codé suit la courbure radiale dudit flanc (2).

12. Pneumatique selon l'une quelconque des revendications 1 à 11, **caractérisé en ce que** ledit flanc (2) comprend au moins une protubérance pour la protection du symbole matriciel codé.

13. Pneumatique selon l'une des revendications 1 à 12, **caractérisé en ce que** chaque flanc dudit pneumatique comporte au moins un symbole matriciel codé.

14. Pneumatique selon la revendication 13, **caractérisé en ce que** les symboles matriciels codés sont différents d'un flanc à l'autre dudit pneumatique

15. Pneumatique selon l'une quelconque des revendications précédentes, **caractérisé en ce que** les parties claires (4) du symbole matriciel codé sont réalisées au cours d'une opération de moulage du pneumatique et les parties sombres (5) sont réalisées par un procédé de gravure au laser après cette opération de moulage.

16. Procédé de réalisation d'un symbole matriciel codé sur un pneumatique, ledit symbole matriciel codé comprenant des parties sombres (5) et des parties claires (4), ledit procédé de réalisation comportant :
- une étape de moulage d'une zone claire (8) sur un flanc (2) du pneumatique ;
- une étape de gravure au laser des parties sombres (5) du symbole matriciel codé (3) sur la zone claire (8) du flanc du pneumatique, les parties claires (4) du symbole matriciel codé étant des portions de la zone claire (8) non gravées, les parties sombres (5) étant en creux par rapport aux parties claires (4), la profondeur de creux étant comprise entre 0,1 et 0,8 mm, et plus préférentiellement entre 0,2 et 0,5 mm, les parties sombres (5) étant délimitées par des parois (6), au moins une de ces parois (6) étant inclinée par rapport à une normale (N) audit flanc (2) du pneumatique d'un angle de dépouille α compris entre 3 et 50 degrés et **en ce que** l'étape de gravure au laser des parties sombres comporte :
- une étape d'enlèvement de matière pour réaliser les parois (6) des parties sombres ;
- une étape de réalisation d'un état de surface déterminé dans le fond des parois sombres, cet état de surface présentant une rugosité Rz comprise entre 50 et 300 µm.

## Patentansprüche

1. Reifen (1) aus Gummimaterial, von dem mindestens eine der Flanken (2) ein codiertes Matrixsymbol (3) aufweist, das mit der Flanke (2) einstückig ausgebildet ist, wobei das codierte Matrixsymbol dunkle Abschnitte (5) und helle Abschnitte (4) umfasst, wobei die dunklen Abschnitte (5) gegenüber den hellen Abschnitten (4) vertieft sind, wobei die Vertiefungstiefe zwischen 0,1 und 0,8 mm, und besser noch zwischen 0,2 und 0,5 mm beträgt, wobei die dunklen Abschnitte (5) von Wänden (6) begrenzt sind, wobei mindestens eine dieser Wände (6) bezogen auf eine Normale (N) zur Flanke (2) des Reifens um einen Freiwinkel α zwischen 3 und 50 Grad geneigt ist, wobei jeder dunkle Abschnitt (5) einen Boden aufweist, **dadurch gekennzeichnet, dass** für alle oder einige der dunklen Abschnitte (5) der Boden einen bestimmten Flächenzustand aufweist, dessen Rauheit Rz zwischen 50 und 300 µm beträgt.

2. Reifen nach Anspruch 1, **dadurch gekennzeichnet, dass** für alle oder einige der dunklen Abschnitte (5) die Wände (6) eines dunklen Abschnitts in der Mitte dieses dunklen Abschnitts zusammentreffen.

3. Reifen nach Anspruch 2, **dadurch gekennzeichnet, dass** der Boden von mindestens einer Furche begrenzt ist.

4. Reifen nach einem der Ansprüche 1 bis 3, **dadurch gekennzeichnet, dass** zwei benachbarte dunkle Abschnitte (5) durch ein Trennelement (7) getrennt sind.

5. Reifen nach einem der Ansprüche 1 bis 4, **dadurch gekennzeichnet, dass** die Querschnitte der dunklen Abschnitte (5) allgemein quadratisch sind.

6. Reifen nach einem der Ansprüche 1 bis 4, **dadurch gekennzeichnet, dass** der Querschnitt der dunklen Abschnitte allgemein scheibenförmig ist.

7. Reifen nach einem der Ansprüche 1 bis 6, **dadurch gekennzeichnet, dass** die dunklen Abschnitte (5) wenigstens eine Abmessung zwischen 0,2 mm und 1 mm, besser noch zwischen 0,3 und 0,7 mm aufweisen.

8. Reifen nach einem der Ansprüche 1 bis 7, **dadurch gekennzeichnet, dass** das gesamte codierte Matrixsymbol wenigstens teilweise bezogen auf die Außenfläche der Flanke des Reifens eingelassen ist, wobei die Einlassungstiefe des codierten Matrixsymbols vorzugsweise zwischen 0,2 mm und 0,8 mm beträgt.

9. Reifen nach Anspruch 8, **dadurch gekennzeichnet, dass** die Einlassungstiefe des codierten Matrixsymbols bezogen auf die Außenfläche der Flanke des Reifens variable ist.

10. Reifen nach einem der Ansprüche 7 oder 8, **dadurch gekennzeichnet, dass** der Boden des codierten Matrixsymbols die theoretische Außenfläche (11) der Flanke (2) des Reifens schneidet.

11. Reifen nach einem der Ansprüche 1 bis 9, **dadurch gekennzeichnet, dass** der Boden des codierten Matrixsymbols der radialen Krümmung der Flanke (2) folgt.

12. Reifen nach einem der Ansprüche 1 bis 11, **dadurch gekennzeichnet, dass** die Flanke (2) wenigstens einen Vorsprung zum Schutz des codierten Matrixsymbols umfasst.

13. Reifen nach einem der Ansprüche 1 bis 12, **dadurch gekennzeichnet, dass** jede Flanke des Reifens wenigstens ein codiertes Matrixsymbol aufweist.

14. Reifen nach Anspruch 13, **dadurch gekennzeichnet, dass** sich die codierten Matrixsymbole von einer Flanke des Reifens zur anderen unterscheiden

15. Reifen nach einem der vorhergehenden Ansprüche, **dadurch gekennzeichnet, dass** die hellen Abschnitte (4) des codierten Matrixsymbols während eines Vorgangs des Formens des Reifens und die dunklen Abschnitte (5) durch ein Lasergravurverfahren nach diesem Formungsvorgang hergestellt werden.

16. Verfahren zur Herstellung eines codierten Matrixsymbols auf einem Reifen, wobei das codierte Matrixsymbol dunkle Abschnitte (5) und helle Abschnitte (4) umfasst, das Herstellungsverfahren aufweisend:
- einen Schritt des Formens eines hellen Bereichs (8) auf einer Flanke (2) des Reifens;
- einen Schritt des Gravierens der dunklen Abschnitte (5) des codierten Matrixsymbols (3) auf dem hellen Bereich (8) der Flanke des Reifens mittels Laser, wobei die hellen Abschnitte (4) des codierten Matrixsymbols Teilbereiche des hellen Bereichs (8) sind, die nicht graviert sind, wobei die dunklen Abschnitte (5) gegenüber den hellen Abschnitten (4) vertieft sind, wobei die Vertiefungstiefe zwischen 0,1 und 0,8 mm, und besser noch zwischen 0,2 und 0,5 mm beträgt, wobei die dunklen Abschnitte (5) von Wänden (6) begrenzt sind, wobei mindestens eine dieser Wände (6) bezogen auf eine Normale (N) zur Flanke (2) des Reifens um einen Freiwinkel α zwischen 3 und 50 Grad geneigt ist, und dadurch, dass der Schritt des Gravierens der dunklen Abschnitte mittels Laser Folgendes aufweist:
- einen Schritt des Abtragens von Material, um die Wände (6) der dunklen Abschnitte herzustellen;
- einen Schritt des Herstellens eines bestimmten Flächenzustands im Boden der dunklen Wände, wobei dieser Flächenzustand eine Rauheit Rz zwischen 50 und 300 µm aufweist.

## Claims

1. Tyre (1) made from a rubbery material, at least one of the sidewalls (2) of which comprises a coded matrix symbol (3) formed as an integral part of the said sidewall, the said coded matrix symbol comprising dark parts (5) and light parts (4), the dark parts (5) being recessed in relation to the light parts (4), the depth of the recesses being comprised between 0.1 and 0.8 mm, and more preferably between 0.2 and 0.5 mm, the dark parts (5) being delimited by walls (6), at least one of these walls (6) being inclined with respect to a normal (N) to the said sidewall (2) of the tyre by a relief angle α of between 3 and 50 degrees, **characterized in that** with each dark (5) part having a bottom, for all or some of the dark parts (5), the bottom has a determined surface finish of which the roughness Rz is between 50 and 300 µm.

2. Tyre according to Claim 1, **characterized in that** for all or some of the dark parts (5), the walls (6) of a dark part meet at the centre of this dark part.

3. Tyre according to Claim 2, **characterized in that** the bottom is delimited by at least one groove.

4. Tyre according to any one of Claims 1 to 3, **characterized in that** two adjacent dark parts (5) are separated by a partition (7).

5. Tyre according to any one of Claims 1 to 4, **characterized in that** the cross sections of the dark parts (5) are roughly square.

6. Tyre according to any one of Claims 1 to 4, **characterized in that** the cross sections of the dark parts are roughly disc -shaped

7. Tyre according to any one of Claims 1 to 6, **characterized in that** the dark parts (5) have at least one dimension comprised between 0.2 mm and 1 mm and more particularly between 0.3 and 0.7 mm.

8. Tyre according to any one of Claims 1 to 7, **characterized in that** the entire coded matrix symbol is inset, at least in part, with respect to the exterior surface of the sidewall of the tyre, the depth by which the coded matrix symbol is inset preferably being comprised between 0.2 mm and 0.8 mm.

9. Tyre according to Claim 8, **characterized in that** the depth by which the coded matrix symbol is inset relative to the exterior surface of the sidewall of the tyre is variable.

10. Tyre according to either one of Claims 7 or 8, **characterized in that** the bottom of the coded matrix symbol is secant with the theoretical exterior surface (11) of the said sidewall (2) of the tyre.

11. Tyre according to any one of Claims 1 to 9, **characterized in that** the bottom of the coded matrix symbol follows the radial curvature of the said sidewall (2).

12. Tyre according to any one of Claims 1 to 11, **characterized in that** the said sidewall (2) comprises at least one protuberance for protecting the coded matrix symbol.

13. Tyre according to any one of Claims 1 to 12, **characterized in that** each sidewall of the said tyre comprises at least one coded matrix symbol.

14. Tyre according to Claim 13, **characterized in that** the coded matrix symbols differ from one sidewall of the said tyre to the other.

15. Tyre according to any one of the preceding claims, **characterized in that** the light parts (4) of the coded matrix symbol are produced during a tyre moulding operation and the dark parts (5) are produced by a laser etching method after this moulding operation.

16. Method for producing a coded matrix symbol on a tyre, the said coded matrix symbol comprising dark parts (5) and light parts (4), the said production method involving:
- a step of moulding a light zone (8) on a sidewall (2) of the tyre;
- a step of laser etching the dark parts (5) of the coded matrix symbol (3) on the light zone (8) of the sidewall of the tyre, the light parts (4) of the coded matrix symbol being non-etched portions of the light zone (8), the dark parts (5) being recessed in relation to the light parts (4), the depth of the recesses being comprised between 0.1 and 0.8 mm, and more preferably between 0.2 and 0.5 mm, the dark parts (5) being delimited by walls (6), at least one of these walls (6) being inclined with respect to a normal (N) to the said sidewall (2) of the tyre by a relief angle α of between 3 and 50 degrees **and in that** the step of laser etching the dark parts comprises:
- a step of removing material to create the walls (6) of the dark parts;
- a step of producing a determined surface finish in the bottom of the dark walls, this surface finish exhibiting a roughness Rz of between 50 and 300 µm.
